# EUROPÄISCHE PATENTSCHRIFT

(11) **EP 1 458 770 B1**
(45) Veröffentlichungstag und Bekanntmachung des Hinweises auf die Patenterteilung: **14.06.2006**
(21) Anmeldenummer: 02793066.8
(22) Anmeldetag: 18.12.2002
(51) Int. Cl.: C08F 8/32, C10M 149/00

(54) **POLYISOBUTENE UND POLYISOBUTENDERIVATE FÜR SCHMIERSTOFFZUSAMMENSETZUNGEN**
POLYISOBUTENES AND POLYISOBUTENE DERIVATIVES FOR USE IN LUBRICANT COMPOSITIONS
POLYISOBUTENES ET DERIVES DE POLYISOBUTENE POUR DES COMPOSITIONS LUBRIFIANTES

(30) Priorität: 19.12.2001 DE 10162567
(43) Veröffentlichungstag der Anmeldung: 22.09.2004
(73) Patentinhaber: BASF Aktiengesellschaft, 67056 Ludwigshafen (DE)
(72) Erfinder: RATH, Hans, Peter, 67269 Grünstadt (DE); LANGE, Arno, 67098 Bad Dürkheim (DE); MACH, Helmut, 69115 Heidelberg (DE)
(74) Vertreter: Reitstötter - Kinzebach
(86) Internationale Anmeldenummer: PCT/EP2002/014486
(87) Internationale Veröffentlichungsnummer: WO 2003/051932

(56) Entgegenhaltungen:
- EP-A- 0 031 236
- EP-A- 0 279 456
- EP-A- 0 341 012
- EP-A- 0 471 248
- EP-A- 0 604 408
- DE-A- 2 904 314
- DE-A- 19 645 430
- GB-A- 2 007 234
- US-A- 5 286 823
- US-A- 5 703 183

## Beschreibung

Die vorliegende Erfindung betrifft die Verwendung von Polyisobutenen in Schmierstoffzusammensetzungen, sowie neue funktionalisierte Derivate von Polyisobutenen, deren Polyisobutenreste durch eine Molekulargewichtsverteilung mit einer Polydispersität M_{W}/M_{N} kleiner 1,4 charakterisiert sind, ein Verfahren zu ihrer Herstellung und die Verwendung der Polyisobuten-Derivate als Schmierstoffadditive.

Derivate des Polyisobutens, die durch sukzessive Umsetzung von hochreaktivem Polyisobuten (PIB) mit Maleinsäureanhydrid (MSA) und anschliessende Umsetzung des dabei erhaltenen Reaktionsprodukts mit Alkoholen, Aminen oder Aminoalkoholen erhältlich sind - im Folgenden auch als Polyisobutenyl-Derivate der Bernsteinsäure, kurz PIBSA bezeichnet - werden in Schmierstoffzusammensetzungen als Dispergatoren für Feststoffteilchen wie Ruß eingesetzt (siehe z.B. DE-A 27 02 604 und EP 602 863). Diese Dispergatoren weisen üblicherweise Polyisobutenyl-Reste mit einem mittleren Molekulargewicht im Bereich von 500 bis 20000 Dalton auf.

Für die Herstellung der Polyisobuten-Derivate ist es naturgemäss wichtig, dass das eingesetzte Polyisobuten eine für die Umsetztung mit MSA hinreichende Reaktivität aufweist. Bei der Umsetzung von PIB mit MSA sind vor allem die olefinischen Endgruppen der Formeln (A) und (B) einer Reaktion mit dem MSA zugänglich, wobei die Gruppen der Formel A die höchste Reaktivität aufweisen.

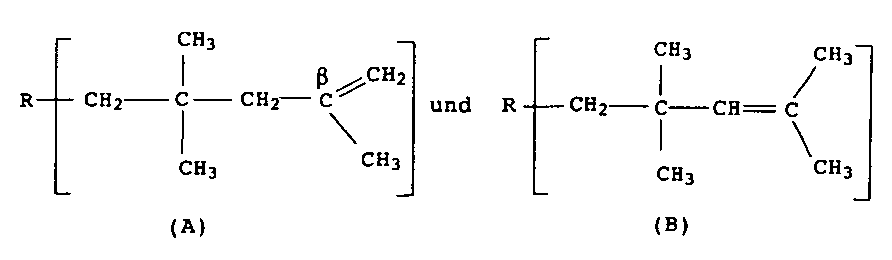

Aus diesem Grund sind Polyisobutene mit einem Gehalt von wenigstens 80 % olefinischen Endgruppen (Gruppen der Formeln A und B) insbesondere mit einem hohen Anteil an Endgruppen A wünschenswert.

Der Stand der Technik lehrt die Herstellung olefinterminierter Polyisobutene durch kationische Polymerisation von Isobuten oder isobutenhaltigen Kohlenwasserstoffströmen in Gegenwart von Bortrifluorid-Komplex-Katalysatoren (siehe beispielsweise DE-A 27 02 604, EP-A 145 235, EP-A 481 297, EP 671 419, EP-A 628 575, EP-A 807 641 und WO 99/31151). Die so erhaltenen Polyisobutene weisen einen hohen Gehalt an olefinisch ungesättigten Endgruppen, inbesondere Endgruppen der allgemeinen Formel (A) auf.

Die durch Funktionalisierung der vorgenannten Polyisobutene hergestellten Polyisobuten-Derivate weisen jedoch ein nicht zufriedenstellendes Dispergier- und Viskositätsverhalten auf. Insbesondere weisen Produkte mit einer guten Dispergierwirkung häufig schlechte viskosimetrische Eigenschaften auf. Zwar kann die Dispergierwirkung durch Erhöhung des Molekulargewichts des Polyisobutenyl-Restes verbessert oder durch erhöhte Additivmengen ausgeglichen werden. Hierdurch nimmt man jedoch eine Viskositätserhöhung in Kauf, die insbesondere bei niedrigen Temperaturen unerwünscht ist, beispielsweise im Hinblick auf die Verwendung der Dispergatoren in Leichtlaufölen.

Der vorliegenden Erfindung liegt die Aufgabe zu Grunde, Dispergatoren für Schmiermittelzusammensetzungen auf Basis von Polyisobutenen bereitzustellen, die gleichzeitig eine hohe Dispergierwirkung und ein verbessertes Viskositätsverhalten aufweisen.

Untersuchungen der Anmelderin haben ergeben, dass das mässige Viskositätsverhalten konventioneller Polyisobuten-Derivate und ihre mäßige Dispergierwirkung auf vergleichsweise hohe molekulare Uneinheitlichkeit der Polyisobutenreste zurückzuführen ist. Mit anderen Worten, die breite Molekulargewichtsverteilung der Polyisobuten-Reste dieser Derivate führt dazu, dass Polyisobutene mit guter Dispergierwirkung, also einem höheren mittleren Molekulargewicht, einen hohen Anteil an hochmolekularen Produkten enthalten, der das Viskositätsverhalten nachteilig beeinflusst, wohingegen die Polyisobutenderivate mit einem günstigeren Viskositätsverhalten, also einem geringeren mittleren Molekulargewicht, einen hohen Anteil an kurzkettigen Produkten mit unbefriedigender Dispergierwirkung (Dispersionsstabilität) enthalten, so dass größere Additivmengen zur Erreichung einer ausreichenden Dispergierwirkung mit den oben beschriebenen Nachteilen erforderlich sind.

Die aus dem eingangs zitierten Stand der Technik bekannten Verfahren liefern zwar Polyisobutene mit einem hohen Anteil an reaktiven Endgruppen. Die dabei erhaltenen Produkte weisen jedoch noch vergleichsweise hohe Anteile an höhermolekularen Produkten auf. Die Molmassenverteilung dieser Polyisobutene ist daher durch Polydispersitätswerte (=Verhältnis von gewichtsmittlerem Molekulargewicht zu zahlenmittlerem Molekulargewicht) M_{w}/M_{N} oberhalb 1,6 charakterisiert.

Polyisobuten-Derivate mit einer engeren Molekulargewichtsverteilung der Polyisobuten-Reste können prinzipiell durch sogenannte "lebende" kationische Polymerisation von Isobuten hergestellt werden, siehe z.B. Kennedy und Ivan "Carbocationic Macromolecular Engineering", Hanser Publishers 1992 sowie US 5,169,914. Unter einer lebenden kationischen Polymerisation versteht man die Polymerisation von Olefinen in Gegenwart eines Initiatorsystems, das eine zur Bildung von Carbokationen geeignete Verbindung, z.B. ein Benzylhalogenid oder ein tert.-Alkylhalogenid oder einen entsprechenden Benzyl- oder Alkylether oder -ester als Initiator und eine Lewis-Säure als Coinitiator umfasst. Die so erhaltenen Polyisobuten-Derivate weisen in der Regel ein Halogenatom als Endgruppe auf und sind daher für die Herstellung von Polyisobutenderivaten nicht geeignet.

Die Anmelderin hat nunmehr gefunden, dass Polyisobutene mit einem hohen Gehalt an olefinischen Endgruppen von mehr als 80 Mol-% einer geringen Polydispersität durch "lebende" kationische Polymerisation hergestellt werden können, wenn man Isobuten in Gegenwart eines Initiatorsystems polymerisiert, das wenigstens ein Metallchlorid oder Halbmetallchlorid als Lewis-Säure und wenigstens eine Verbindung II mit wenigstens einer funktionellen Gruppe FG umfasst, die unter Polymerisationsbedingungen ein Carbokation oder einen kationogenen Komplex bildet, wobei FG ausgewählt ist unter Halogen, Acyloxy und Alkoxy, die an ein sekundäres oder tertiäres aliphatisches C-Atom, an ein allylisches oder an ein benzylisches C-Atom gebunden sind, in einem gegenüber der Lewis-Säure inerten Lösungsmittel bei einem Molverhältnis von Lewissäure zu Verbindung II im Bereich von 1:1 bis 1:100 polymerisiert. Dieses Verfahren ist auch Gegenstand der älteren deutschen Patentanmeldungen P 10061727.1 und P 10061751.8.

Der hohe Gehalt an olefinischen Endgruppen der so hergestellten Polyisobutene und ihre höhere molekulare Einheitlichkeit, charakterisiert durch eine Verteilungskurve mit einer Polydispersität von M_{W}/M_{N} unterhalb 1,4, ermöglicht die Herstellung der erfindungsgemässen Derivate des Polyisobutens.

Die vorliegende Erfindung betrifft somit Polyisobutenyl-Derivate der Bernsteinsäure, die erhältlich sind durch:
i) Umsetzung eines Polyisobutens mit einem Gehalt reaktiver Endgruppen von wenigstens 80 %, dessen Molekulargewichtsverteilung durch ein Maximum Mp der Verteilungskurve im Bereich von 500 bis 20000 Dalton und ein Verhältnis von gewichtsmittlerem Molekulargewicht zu zahlenmittlerem Molekulargewicht M_{W}/M_{N} unterhalb von 1,4 charakterisiert ist, mit Maleinsäure oder Maleinsäureanhydrid;
ii) Umsetzung des in i) erhaltenen Polyisobuten-Bernsteinsäure-Derivats mit wenigstens einer Verbindung I die wenigstens eine primäre oder sekundäre Amingruppe und/oder eine OH-Gruppe aufweist, unter Bildung einer Amid-, Imid- oder Ester-Bindung.

Die Erfindung betrifft weiterhin ein Verfahren zur Herstellung der Polyisobuten-Bernsteinsäure-Derivate, das die Herstellung eines Polyisobutens mit einer Polydispersiät M_{W}/M_{N} < 1,4 in der oben beschriebenen Weise, gefolgt von den Schritten i) und ii), umfasst.

Unter Polyisobutenylresten versteht man solche organischen Kohlenwasserstoffreste, die zu einem überwiegenden Anteil, vorzugsweise zu 80 Mol-% und insbesondere zu 90 Mol-% aus Wiederholungseinheiten der Formel [-CH₂-C(CH₃)₂]- aufgebaut sind.

Bevorzugt sind solche Polyisobutene mit einer Polydispersität M_{w}/M_{N} bis 1,3 und insbesondere bis 1,2. Im Hinblick auf die Verwendung als Dispergatoren sind solche Polyisobuten-Derivate bevorzugt, deren Molekulargewichtsverteilung ein Maximum Mp im Bereich von 1000 bis 15000 und insbesondere im Bereich von 1500 bis 5000 aufweist. Das zahlenmittlere Molekulargewicht M_{N} liegt in vergleichbaren Bereichen.

Als Verbindungen I kommen grundsätzlich alle Alkohole, Amine und Aminoalkohole in Betracht, die wenigstens eine primäre oder sekundäre Aminogruppe aufweisen. Im Hinblick auf die Dispergieraktivität der erfindungsgemässen Polyisobuten-Bernsteinsäurederivate werden als Verbindungen I Alkohole, Amine und Aminoalkohole bevorzugt, die ausschließlich gesättigte aliphatische oder gesättigte cycloaliphatische Struktureinheiten aufweisen. Bevorzugt sind Aminoalkohole und Amine, die wenigstens eine primäre Aminogruppe aufweisen. Vorzugsweise weisen die Verbindungen I neben der zur Umsetzung mit dem Reaktionsprodukt von PIB mit MSA erforderlichen wenigstens einen funktionellen Gruppe wenigstens eine weitere, polare, nichtionische funktionelle Gruppe, z.B. eine weitere Aminogruppe oder OH-Gruppe und/oder Ether- und/oder Iminogruppen auf. Das Molekulargewicht der Verbindungen I liegt vorzugsweise im Bereich von 50 bis 2000 Dalton.

Besonders bevorzugte Verbindungen I weisen wenigstens zwei und insbesondere genau zwei primäre Aminogruppen und gegebenenfalls weitere polare Gruppen, ausgewählt unter sekundären Aminogruppen, Iminogruppen, OH-Funktionen oder Ethergruppen auf.

Beispiele für bevorzugte Amine und Aminoalkohole sind: Alkylendiamine wie Ethylen-1,2-diamin, Propylen-1,2-diamin, Propylen-1,3-diamin, Butylendiamine, die Monoalkyl-, Dialkyl- und Trialkylderivate dieser Amine, wie z.B. N,N-Dimethylpropylen-1,3-diamin, weiterhin Alkanolamine wie Ethanolamin und 3-Aminopropanol. Ebenfalls geeignet sind Monoalkylamine und Alkylendiamine, in denen die Alkyl- oder Alkylenreste durch ein oder mehrere, nicht benachbarte Sauerstoffatome unterbrochen sind und die gegebenenfalls auch Hydroxygruppen oder weitere Aminogruppen aufweisen können wie 4,7-Dioxadecan-1,10-diamin, 2-(2-Aminoethoxy)ethanol, N-(2-Aminoethyl)ethanolamin. Weitere Beispiele sind N-Amino-C₁-C₆-alkylpiperazine wie 4-(2-Aminoethyl)piperazin. Geeignet sind auch ethoxylierte und/oder propoxylierte Derivate dieser Amine und Aminoalkohole.

Geeignete Alkohole sind insbesondere Di- oder Polyole mit vorzugsweise 2 bis 5 Hydroxylgruppen, z.B. Glykol, Glycerin, Diglycerin, Triglycerin, Trimethylolpropan, Pentaerythrit sowie ethoxylierte und/oder propoxylierte Derivate dieser Di- und Polyole. Besonders bevorzugte Verbindungen I sind die Amine der allgemeinen Formel Ia

H₂N-(R-NH)ₘ-A-(NH-R')ₙ-NH₂ (Ia)

worin
- A: für C₂-C₂₀-Alkylen, das durch ein oder mehrere, nicht benachbarte Sauerstoffatome unterbrochen sein kann, oder für C₅-C₂₀-Cycloalkylen steht;
- R, R': unabhängig voneinander für C₂-C₄-Alkylen stehen und
- n, m: unabhängig voneinander für 0 bis 5 stehen.

C₂-C₂₀-Alkylen steht für eine zweiwertige lineare oder verzweigte Alkylgruppe mit 2 bis 20 C-Atomen, wobei die beiden freien Valenzen sich vorzugsweise an verschiedenen C-Atomen befinden. C₂-C₄₋Alkylen steht entsprechend z.B. für 1,2-Ethylen, 1,2- oder 1,3-Propylen. C₂-C₂₀-Alkylen steht demnach für die bei C₂-C₃-Alkylen genannten Gruppen sowie z.B. für Butan-1,2-diyl, -2,3-diyl, -1,3-diyl oder -1,4-diyl, Pentan-1,2-diyl, -2,3-diyl, -1,3-diyl, -1,4-diyl, -2,4-diyl oder -1,5-diyl, Hexan-1,6-diyl, 2,2,4-Trimethylpentan-1,4-diyl, Octan-1,8-diyl etc. In den Alkylengruppen können auch ein oder zwei Kohlenstoffatome durch Sauerstoffatome ersetzt sein, die weder zueinander noch zu den Verknüpfungsstellen benachbart sind. Derartige Alkylengruppen weisen in der Regel 5 bis 20 C-Atome auf. Beispiele hierfür sind: 3-Oxapentan-1,5-diyl, 3-Oxahexan-1,6-diyl, 4-Oxaheptan-1,7-diyl, 3,6-Dioxaoctan-1,8-diyl, 3,7-Dioxanonan-1,9-diyl, 4,7-Dioxadecan-1,10-diyl, 4,8-Dioxaundecan-1,11-diyl, 4,9-Dioxadodecan-1,12-diyl, 4,11-Dioxatetradecan-1,14-diyl.

C₅-C₂₀-Cycloalkylen steht für einen zweiwertigen monc- oder bicycloaliphatischen Rest mit vorzugsweise 5 bis 20 C-Atomen. Beispiele hierfür sind Cyclopentan-1,2- und -1,3-diyl, Cyclohexan-1,2-diyl, -1,3-diyl und 1,4-diyl, Cycloheptan-1,2-diyl, -1,3-diyl und 1,4-diyl, Norbornan-2,3-diyl, 2,2-Bis(cyclohexyl-4'-yl)propan.

Unter den Aminen Ia sind solche Verbindungen bevorzugt, worin A für C₂-C₄-Alkylen steht. R und R' bedeuten vorzugsweise 1,2-Ethylen oder 1,3-Propylen. Die Summe m+n hat vorzugsweise den Wert 1 bis 10 und insbesondere 2 bis 6. Beispiele für derartige Amine sind Diethylentriamin, Triethylentetramin, Tetraethylenpentamin, N,N'-Bis(3-aminopropyl)ethylendiamin, 1,5-Bis(3-aminopropylamino)-3-iminopentan und 1,8-Bis(3-aminopropylamino)-3,6-bisiminooctan.

Die Herstellung des Polyisobutens mit einem Gehalt an reaktiven Endgruppen von wenigstens 80% und einer Molekulargewichtsverteilung, die durch ein Maximum Mp im Bereich von 500 bis 20.000 Dalton und einem Verhältnis M_{W}/M_{N} < 1,4 gekennzeichnet ist, erfolgt erfindungsgemäß durch ein Verfahren einer lebenden kationischen Polymerisation, wie es z.B. in den älteren deutschen Patentanmeldungen P 10061727.1 und P 10061751.8 beschrieben ist, auf die hiermit Bezug genommen wird.

Im erfindungsgemäßen Verfahren wird die Polymerisation des Isobutens durch das Initiatorsystem, umfassend eine Lewissäure und wenigstens eine Verbindung II ausgelöst. Man nimmt an, dass die Lewis-Säure mit der Verbindung II ein Carbokation oder zumindest einen ionogenen Komplex bildet bzw. eine Polarisierung der Bindung zwischen der funktionellen Gruppe FG und dem mit ihr verbundenen C-Atom bewirkt, so daß eine Wechselwirkung mit der olefinisch ungesättigten Doppelbindung des Isobutens stattfindet, die eine positive (Partial)Ladung auf dem tertiären Kohlenstoffatom des Isobutens erzeugt. Diese wiederum wechselwirkt mit einem weiteren Isobutenmolekül unter Fortsetzung der Polymerisationsreaktion.

Die Begriffe "Carbokation" und "kationogener Komplex" sind nicht streng voneinander getrennt, sondern umfassen alle Zwischenstufen von solvens-getrennten Ionen, solvens-getrennten Ionenpaaren, Kontaktionenpaaren und stark polarisierten Komplexen mit positiver Partialladung an einem C-Atom der Verbindung II.

Im Folgenden wird die Verbindung II auch als Initiator und die Lewis-Säure als Coinitiator bezeichnet.

Als Lewis-Säuren kommen beispielsweise die (Halb)metallchloride BCl₃, TiCl₄, VCl₅, SnCl₄, FeCl₃ in Betracht. Bevorzugte (Halb)metallchloride sind BCl₃ und insbesondere TiCl₄.

Bevorzugt sind solche Verbindungen II, worin die funktionelle Gruppe FG die allgemeine Formel 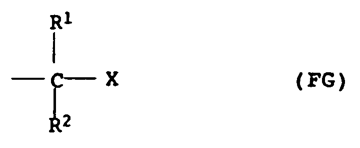 aufweist, worin
- X: ausgewählt ist unter Halogen, C₁-C₆-Alkoxy und C₁-C₆-Acyloxy,
- R¹: Wasserstoff oder Methyl bedeutet und
- R²: für Methyl steht, oder mit R¹ oder dem Molekülteil an den die funktionelle Gruppe FG gebunden ist, einen C₅-C₆-Cycloalkylring bildet, R² auch Wasserstoff bedeuten kann, wenn die funktionelle Gruppe FG an ein aromatisches oder olefinisch ungesättigtes C-Atom gebunden ist.

Die Verbindungen der allgemeinen Formel II weisen vorzugsweise eine, zwei, drei oder vier, insbesondere eine oder zwei, und besonders bevorzugt eine funktionelle Gruppe FG auf. Bevorzugt steht X in Formel (FG) für ein Halogenatom, insbesondere für Chlor.

Bevorzugte Verbindungen II gehorchen beispielsweise den allgemeinen Formeln II-A bis II-D: 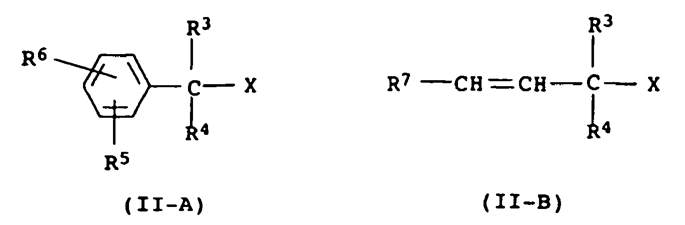 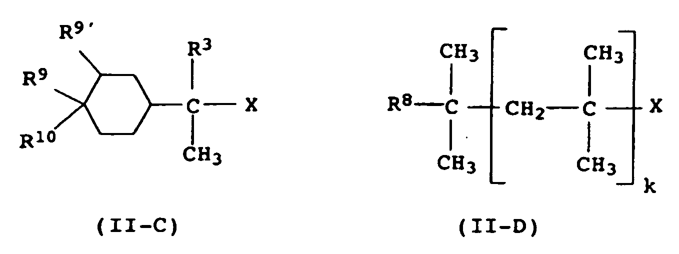 worin X die zuvor genannte Bedeutung hat,
- k: für 0 bis 10 steht,
- R³, R⁴ und R¹⁰: unabhängig voneinander für Wasserstoff oder Methyl stehen,
- R⁵, R⁶ und R⁷: unabhängig voneinander für Wasserstoff, C₁-C₄-Alkyl oder eine Gruppe CR³R⁴-X, stehen, worin R³, R⁴ und X die zuvor genannten Bedeutungen haben und
- R⁸: für Wasserstoff, Methyl oder ein Gruppe X steht und
- R⁹ und R^{9'}: Wasserstoff oder eine Gruppe X bedeuten.

In den Formeln II-A bis II-D stehen R³ und R⁴ vorzugsweise beide für Methyl. In der Formel II-A steht R⁶ beispielsweise für eine Gruppe CR³R⁴-X, die in para-Position zur CR³R⁴X-Gruppe angeordnet ist, wenn R⁵ Wasserstoff bedeutet. Sie kann sich auch in der meta-Position befinden, wenn die Gruppe R⁵ für C₁-C₄-Alkyl oder eine Gruppe CR³R⁴-X steht. Bevorzugte Verbindungen II-A sind z.B. 2-Chlor-2-phenylpropan sowie 1,3- und 1,4-bis-(2-Chlorpropyl-2)benzol.

In Formel II-B steht R⁷ vorzugsweise für eine Gruppe CR³R⁴-X oder für Wasserstoff. Beispiele für Verbindungen der Formel II-B sind Allylchlorid, Methallylchlorid, 2-Chlor-2-methylbuten-2 sowie 2,5-Dichlor-2,5-dimethylhexen-3.

In den Verbindungen II-C steht R³ vorzugsweise für Methyl. R² steht vorzugsweise ebenfalls für Methyl. R⁹ steht vorzugsweise für eine Gruppe X, und insbesondere für Halogen, insbesondere, wenn R¹⁰ für Methyl steht. Beispiele für Verbindungen der allgemeinen Formel II-C sind 1,8-Dichlor-4-p-menthan (Limonendihydrochlorid), 1,8-Dibrom-4-p-menthan (Limonendihydrobromid), 1-(1-Chlorethyl-3-chlorcyclohexan, 1-(1-Chlorethyl-4-chlorcyclohexan, 1-(1-Bromethyl)-3-bromcyclohexan und 1-(1-Bromethyl)-4-bromcyclohexan.

Unter den Verbindungen der Formel II-D sind solche bevorzugt, in denen R⁸ für eine Methylgruppe steht. Unter den Verbindungen der Formel II-D sind solche Verbindungen bevorzugt, in denen k für 1, 2, 3 oder 4 steht. FG steht vorzugsweise für Halogen und insbesondere für Chlor. Im Hinblick auf die Verwendung der Polyisobuten-Derivate als Dispergatoren sind die Verbindungen II-D bevorzugt.

In der Regel wird man zur Herstellung der Polyisobutene, die für die Weiterverarbeitung zu den erfindungsgemässen PIB-Derivaten vorgesehen sind, die Verbindung II in einer Menge von wenigstens 10⁻³ mol pro mol Isobuten, vorzugsweise im Bereich von 5 x 10⁻³ bis 0,2 mol pro mol und insbesondere im Bereich von 0,01 bis 0,1 mol je mol Isobuten einsetzen. Hierbei ist zu berücksichtigen, dass das erreichte Molekulargewicht des nach dem erfindungsgemäßen Verfahren hergestellten Polyisobutens von der Menge an Verbindung II dergestalt abhängt, dass mit zunehmender Menge an Verbindung II, bezogen auf Isobuten, das Molekulargewicht des Polyisobutens abnimmt.

Die Lewis-Säure wird zur Herstellung der Polyisobutene im erfindungsgemäßen Verfahren naturgemäß in einer Menge eingesetzt, die zur Bildung des Initiatorkomplexes ausreicht. Dies ist in der Regel bereits bei geringen Konzentrationen der Lewis-Säure im Reaktionsmedium, in der Regel wenigstens 0,01 mol/l, gewährleistet. In der Regel wird daher die Lewis-Säure im Reaktionsmedium eine Konzentration von 3 mol/l, vorzugsweise 2 mol/l und besonders bevorzugt 1 mol/l nicht überschreiten. Insbesondere liegt die Konzentration im Bereich von 0,1 bis 2 mol/l und besonders bevorzugt im Bereich von 0,2 bis 1 mol/l.

Das Molverhältnis von Lewis-Säure zu Verbindung II wird vorzugsweise einen Wert von 1:1 nicht überschreiten und liegt insbesondere im Bereich von 1:1,2 bis 1:10.

Vorzugsweise umfasst das Initiatorsystem zusätzlich zu den Verbindungen II wenigstens eine weitere aprotisch polare Verbindung III, die zur Komplexbildung mit der Lewis-Säure oder dem unter Reaktionsbedingungen gebildeten Carbokation oder ionogenen Komplex aus Lewis-Säure und Verbindung II geeignet ist. Hierbei handelt es sich um sogenannte Lewis-Basen (Elektronendonatoren), die wenigstens ein freies Elektronenpaar an wenigstens einem Heteroatom aufweisen, das beispielsweise ausgewählt ist unter Sauerstoff-, Stickstoff-, Phosphor- und Schwefelatomen.

Beispiele für derartige Donorverbindungen III sind Pyridine wie Pyridin und substituierte Pyridine, insbesondere sterisch gehinderte Pyridine, weiterhin N,N-Dialkylamide von aliphatischen oder aromatischen Carbonsäuren wie N,N-Dimethylacetamid, N-Alkyllactame wie N-Methylpyrrolidon, Dialkylether wie Diethylether und Diisopropylether, cyclische Ether, wie Tetrahydrofuran, Trialkylamine wie Triethylamin, C₁-C₄-Alkylester aliphatischer C₁-C₆-Carbonsäuren wie Ethylacetat, Dialkylthioether oder Alkylarylthioether wie Methylphenylsulfid, Dialkylsulfoxide, wie Dimethylsulfoxid, Alkylnitrile wie Acetonitril und Propionitril, Trialkylphosphine oder Triarylphosphine wie Trimethylphosphin, Triethylphosphin, Tri-n-butylphosphin und Triphenylphosphin und nicht polymerisierbare, aprotische siliziumorganische Verbindungen, die wenigstens einen über Sauerstoff gebundenen organischen Rest aufweisen. Dieser Rest weist in der Regel 1 bis 20 Kohlenstoffatome auf. Beispiele für derartige Reste sind Alkyloxy, Cycloalkyloxy, Aryloxy, Arylalkyloxy und Acyloxy (= Alkylcarbonyloxy).

Unter den vorgenannten Donoren sind Pyridin und sterisch gehinderte Pyridin-Derivate sowie insbesondere siliziumorganische Verbindungen bevorzugt. In einer besonders bevorzugten Ausführungsform setzt man als Donor wenigstens eine siliziumorganische Verbindung ein.

Sterisch gehinderte Pyridine sind solche die zumindest in der 2- und 6-Position des Pyridinringes sterisch anspruchsvollen Alkylgruppen aufweisen, z.B. 2,6-Diisopropylpyridin und 2,6-Di-tert.-butylpyridin.

Der Donor III und insbesondere die siliziumorganische Verbindung wird vorzugsweise in einer Menge eingesetzt, dass das Molverhältnis von Donormolekülen III zu den Metallatomen bzw. den Halbmetallatomen in der Lewis-Säure im Bereich von 1:1000 bis 1:1, vorzugsweise im Bereich von 1:500 bis 1:1,5, und besonders bevorzugt im Bereich von 1:200 bis 1:2, liegt.

Die als Donor III geeigneten siliziumorganischen Verbindungen können ein oder mehrere, z.B. 2 oder 3, Siliziumatome mit wenigstens einem über Sauerstoff gebundenen organischen Rest aufweisen. Bevorzugt sind solche siliziumorganischen Verbindungen, die einen, zwei oder drei, und insbesondere 2 oder 3 über Sauerstoff gebundene organische Reste je Siliziumatom aufweisen.

Bevorzugte siliziumorganische Verbindungen sind solche, die die allgemeine Formel IIIa aufweisen:

R^{a}ₙSi(OR^{b})₄₋ₙ (IIIa)

worin n für 1, 2 oder 3 steht,
- R^{a}: gleich oder verschieden sein können und unabhängig voneinander C₁-C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{b}: gleich oder verschieden sind und C₁-C₂₀-Alkyl bedeuten oder für n = 1 oder 2 zwei verschiedene Reste R^{b} auch eine 2- oder 3-gliedrige Alkylen-Einheit bilden können.

In Formel IIIa steht die Variable n vorzugsweise für 1 oder 2. Die Variable R^{a} bedeutet vorzugsweise eine C₁-C₉-Alkylgruppe, und insbesondere eine verzweigte oder über ein sekundäres C-Atom gebundene Alkylgruppe, wie Isopropyl, Isobutyl, 2-Butyl, oder eine 5-, 6- oder 7-gliedrige Cycloalkylgruppe. Die Variable R² steht vorzugsweise für eine C₁-C₄-Alkylgruppe.

Beispiele für derartige bevorzugte Verbindungen sind Dimethoxydiisopropylsilan, Dimethoxyisobutylisopropylsilan, Dimethoxydiisobutylsilan, Dimethoxydicyclopentylsilan, Dimethoxyisobutyl-2-butylsilan, Diethoxyisobutylisopropylsilan, Triethoxytoluylsilan und Triethoxybenzylsilan.

Als Isobuten-Einsatzstoffe für das erfindungsgemäße Verfahren eignen sich sowohl Isobuten selber als auch isobutenhaltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (FCC: Fluid Catalyzed Cracking), sofern sie weitgehend von darin enthaltenem 1,3-Butadien befreit sind. Erfindungsgemäß geeignete C₄-Kohlenwasserstoffströme enthalten in der Regel weniger als 5000 ppm, vorzugsweise weniger als 2000 ppm Butadien. Bei Einsatz von C₄-Schnitten als Einsatzmaterial übernehmen die von Isobuten verschiedenen Kohlenwasserstoffe die Rolle eines inerten Lösungsmittels.

Als Lösungsmittel kommen alle niedermolekularen, organischen Verbindungen in Betracht, die von den Verbindungen II und III sowie von Isobuten, verschieden sind, die keine abstrahierbaren Protonen aufweisen und die unter den Polymerisationsbedingungen, gegebenenfalls als Mischung untereinander flüssig sind. Bevorzugte Lösungsmittel sind Kohlenwasserstoffe, z.B. acyclische Alkane mit 2 bis 8 und vorzugsweise 3 bis 6 Kohlenstoffatomen wie Ethan, Iso- und n-Propan, n-Butan und seine Isomeren, n-Pentan und seine Isomeren, n-Hexan und seine Isomeren sowie n-Heptan und seine Isomeren, cyclische Alkane mit 5 bis 8 C-Atomen wie Cyclopentan, Cyclohexan, Cycloheptan, acyclische Alkene mit vorzugsweise 2 bis 8 Kohlenstoffatomen wie Ethen, Iso- und n-Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol, sowie Halogenkohlenwasserstoffe, z.B. halogenierte Alkane mit 1 bis 5 Kohlenstoffatomen und 1, 2, 3, 4, 5 oder 6 Halogenatomen, ausgewählt unter Fluor oder insbesondere Chlor wie Methylchlorid, Dichlormethan, Trichlormethan, Ethylchlorid, 1,2-Dichlorethan und 1,1,1-Trichlorethan sowie Chloroform und Halogenaromaten wie Chlorbenzol.

Geeignet sind nicht nur die Lösungsmittel als solche sondern auch Mischungen dieser Lösungsmittel. Mischungen sind insbesondere dann bevorzugt, wenn das Lösungsmittel einen Schmelzpunkt oberhalb der gewünschten Polymerisationstemperatur aufweist.

Besonders bevorzugt sind Lösungsmittel und Lösungsmittelgemische, die wenigstens einen Kohlenwasserstoff umfassen. Hierunter besonders bevorzugt sind Lösungsmittelgemische, die wenigstens einen Kohlenwasserstoff und wenigstens ein Halogenalkan umfassen. Hierunter besonders bevorzugt sind Lösungsmittelgemische, die wenigstens ein acyclisches Alkan mit 4 bis 6 C-Atomen, insbesondere Hexan, und wenigstens ein Chloralkan, insbesondere Methylchlorid oder Methylenchlorid, umfassen. Ebenfalls besonders bevorzugt sind Lösungsmittelgemische, die wenigstens einen aromatischen Kohlenwasserstoff, insbesondere Toluol, und wenigstens ein Chloralkan, insbesondere Methylchlorid oder Methylenchlorid, umfassen. Das Volumenverhältnis von Kohlenwasserstoff zu halogeniertem Kohlenwasserstoff liegt dabei vorzugsweise im Bereich von 1:10 bis 10:1, insbesondere im Bereich von 4:1 bis 1:4. Selbstverständlich umfassen die Chloralkane in diesen Mischungen keine Verbindungen, worin Chloratome an sekundären oder tertiären Kohlenstoffatomen sitzen. Ebenfalls besonders bevorzugt sind ternäre Lösungsmittelgemische, die wenigstens einen aromatischen Kohlenwasserstoff, insbesondere Toluol, wenigstens ein acyclisches Alkan mit 4 bis 6 C-Atomen, insbesondere Hexan, und wenigstens ein Chloralkan, insbesondere Methylchlorid oder Methylenchlorid, umfassen. Das Volumenverhältnis der drei vorgenannten Komponenten wird dann so gewählt, dass das Verhältnis von Alkan zu Aromat im Bereich von 1:10 bis 10:1 liegt und das Volumenverhältnis von Alkan + Aromat zu Halogenalkan im Bereich von 10:1 bis 1:1 liegt. Führt man die Polymerisation unter Siedekühlung durch, dann enthalten die Lösungsmittel bzw. die Lösungsmittelgemische noch bis zu 50 Vol.-%, z.B. 5 bis 50 Vol.-%, vorzugsweise 10 bis 30 Vol.-% einer leicht verdampfbaren Lösungsmittel-Komponente, z.B. Ethylen.

Es versteht sich von selbst, dass man die Polymerisation unter weitgehend aprotischen, insbesondere unter wasserfreien, Reaktionsbedingungen durchführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm, und insbesondere weniger als 5 ppm beträgt. In der Regel wird man daher die Einsatzstoffe vor ihrer Verwendung physikalisch und/oder durch chemische Maßnahmen trocknen. Beispielsweise kann man die als Lösungsmittel bevorzugt eingesetzten aliphatischen oder cycloaliphatischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer zur Entfernung von Wasserspuren aus dem Lösungsmittel ausreichenden Menge versetzen. Das so behandelte Lösungsmittel wird dann direkt in das Reaktionsgefäß einkondensiert. In ähnlicher Weise kann man auch mit den α-Olefinen, den aromatischen Kohlenwasserstoffen und den zu polymerisierenden Monomeren, insbesondere dem Isobuten, verfahren.

Die Vorreinigung bzw. Vortrocknung der Lösungsmittel und des Isobutens erfolgt in üblicher Weise, vorzugsweise durch Behandlung mit festen Trocknungsmitteln wie Molekularsieben oder vorgetrockneten Oxiden wie Calciumoxid oder Bariumoxid. In analoger Weise kann man die Einsatzstoffe trocknen, für die eine Behandlung mit Metallalkylen nicht in Betracht kommt, beispielsweise die als Lösungsmittel verwendeten Alkylhalogenide, sowie die Verbindungen II und III.

In der Regel wird man das erfindungsgemäße Verfahren bei Temperaturen unterhalb von Raumtemperatur (25°C) und vorzugsweise unterhalb von 0°C, z.B. im Bereich von 0 bis -140°C, vorzugsweise im Bereich von -30 bis -120°C, und besonders bevorzugt im Bereich von
- 40 bis -110°C durchführen. Dabei sind in der Regel umso höhere Reaktionstemperaturen möglich, je größer die Reinheit der eingesetzten Edukte ist. Der Reaktionsdruck ist von untergeordneter Bedeutung und richtet sich in bekannter Weise nach den verwendeten Apparaturen und sonstigen Reaktionsbedingungen.

Die Polymerisation des Isobutens bzw. des isobutenhaltigen Einsatzmaterials erfolgt spontan beim Vermischen des erfindungsgemäß zur Anwendung kommenden Initiatorsystems mit dem Isobuten bzw. dem isobutenhaltigen Einsatzmaterial in dem inerten organischen Lösungsmittel bei der gewünschten Reaktionstemperatur. Hierbei kann man so vorgehen, dass man Isobuten in dem inerten Lösungsmittel vorlegt, auf Reaktionstemperatur kühlt und anschließend das Initiatorsystem zugibt. Man kann auch so vorgehen, dass man das Initiatorsystem in dem Lösungsmittel vorlegt, und anschließend das Isobuten bzw. den isobutenhaltigen Einsatzstoff zugibt, entweder auf einmal oder nach Maßgabe des Verbrauchs. Außerdem kann man einen Teil oder die Gesamtmenge des Isobutens bzw. des isobutenhaltigen Einsatzstoffes in dem Lösungsmittel vorlegen und dann das Initiatorsystem zugeben. Die Restmengen an Isobuten bzw. isobutenhaltigem Einsatzstoff werden dann im Verlaufe der Reaktion, beispielsweise nach Maßgabe ihres Verbrauchs, zugeführt. Bei der Zugabe des Initiatorsystems wird man in der Regel so vorgehen, dass man die Komponenten des Initiatorsystems getrennt zugibt. Bei der hier beschriebenen diskontinuierlichen Fahrweise wird man in der Regel so vorgehen, dass man zuerst die Initiatorverbindung II und gegebenenfalls die Verbindung III und anschließend die Lewis-Säure (Coinitiator) zugibt. Der Zeitpunkt der Initiierung ist der Zeitpunkt, an dem beide Komponenten des Initiatorsystems im Reaktionsgefäss enthalten sind. Beispielsweise kann man so vorgehen, dass man zunächst das Lösungsmittel, dann die Verbindung II und gegebenenfalls den Donor III und dann einen Teil oder die Gesamtmenge des Isobutens bzw. des isobutenhaltigen Einsatzstoffes vorlegt, die Polymerisation durch Zugabe der Lewis-Säure startet, und anschließend gegebenenfalls noch vorhandene Restmengen an Isobuten bzw. isobutenhaltigem Einsatzstoff der Polymerisation zuführt. Es ist aber auch möglich, zunächst das Lösungsmittel, dann die Lewis-Säure und einen Teil oder die Gesamtmenge des Isobutens oder des isobutenhaltigen Einsatzstoffs vorzulegen und dann die Polymerisation durch Zugabe der Verbindung II und gegebenenfalls der Verbindung III zu starten. Bevorzugt erfolgt die Zugabe des Coinitiators in ein Reaktionsgefäß, das bereits Isobuten und ggf. Comonomere enthält, wobei im Verlauf der Polymerisationsreaktion dann weitere Mengen Isobuten und gegebenenfalls Lewis-Säure unter Polymerisationsbedingungen zugegeben werden können (im Allgemeinen auch als inkrementelle Monomerzugabe bezeichnet).

Neben der hier beschriebenen diskontinuierlichen Vorgehensweise kann man die Polymerisation auch als kontinuierliches Verfahren ausgestalten. Hierbei führt man die Einsatzstoffe, d.h. die zu polymerisierenden Monomere, das Lösungsmittel sowie das Initiatorsystem der Polymerisationsreaktion kontinuierlich zu und entnimmt kontinuierlich Reaktionsprodukt, so dass sich im Reaktor mehr oder weniger stationäre Polymerisationsbedingungen einstellen. Die Komponenten des Initiatorsystems können dabei sowohl getrennt als auch gemeinsam, vorzugsweise verdünnt im Lösungsmittel zugeführt werden. Das zu polymerisierende Isobuten bzw. die isobutenhaltigen Einsatzstoffe können als solche, verdünnt mit einem Lösungsmittel oder als isobutenhaltiger Kohlenwasserstoffstrom zugeführt werden. Beispielsweise kann die Zugabe der im Lösungsmittel verdünnten Komponenten des Initiatorsystems über Mehrstoffdüsen erfolgen, um eine gute Durchmischung der Komponenten zu erreichen.

Die Abführung der Reaktionswärme bei der diskontinuierlichen wie auch bei der kontinuierlichen Reaktionsführung erfolgt in üblicher Weise, beispielsweise durch intern eingebaute wärmetauscher und/oder durch Wandkühlung und/oder unter Ausnutzung einer Siedekühlung. Hier hat sich insbesondere die Verwendung von Ethen und/oder Mischungen von Ethen mit anderen Kohlenwasserstoffen und/oder Halogenkohlenwasserstoffen als Lösungsmittel bewährt, da Ethen nicht nur preiswert ist, sondern auch einen Siedepunkt im gewünschten Polymerisationstemperaturbereich aufweist.

Als Reaktionsgefäße für die Durchführung des erfindungsgemäßen Verfahrens kommen grundsätzlich alle Reaktoren in Betracht, wie sie üblicherweise bei einer kationischen Polymerisation von Isobuten, z.B. einer kationischen Polymerisation von Isobuten mit Bortrifluorid-Sauerstoff-Komplexen, eingesetzt werden. Insoweit wird hier auf den einschlägigen Stand der Technik verwiesen. Bei diskontinuierlicher Reaktionsführung kommen die hierfür üblichen Rührkessel in Betracht, die vorzugsweise mit einer Siedekühlung, geeigneten Mischern, Zuläufen, Wärmetauscherelementen und Inertisierungsvorrichtungen ausgerüstet sind. Die kontinuierliche Reaktionsführung kann in den hierfür üblichen Reaktionskesseln, Reaktionskaskaden, Rohrreaktoren, Rohrbündelreaktoren, insbesondere kreisförmig oder wendelförmig geführten Rohr- und Rohrbündelreaktoren, durchgeführt werden, die vorzugsweise in der oben für Reaktionskessel beschriebenen Weise ausgerüstet sind.

Geeignete Reaktoren für die kontinuierliche Herstellung der Polyisobutene sind insbesondere Rohrreaktoren. Hierunter sind solche bevorzugt, in denen eine möglichst geringe Rückvermischung stattfindet, da hier besonders enge Molekulargewichtsverteilungen erhalten werden. Ideal ist hier die Verwendung eines Wendelstromreaktors, auch als Wendelrohrreaktor bezeichnet, bei dem durch entsprechende Wendelung unterschiedliche Strömungsgeschwindigkeiten im Kernbereich und im Wandbereich des Rohres (Strömungsprofil) vermieden werden. Durch Einbauten statischer Mischer oder ähnlicher Einbauten läßt sich auch bei laminarer Strömung eine gute Durchmischung und insbesondere eine gute Wärmeableitung erzielen.

Zur Gewinnung der Polyisobutene aus dem Reaktionsgemisch wird dieses im Anschluß an die Polymerisation in der für kationische Polymerisationsreaktionen üblichen Weise deaktiviert, vorzugsweise durch Zugabe einer protischen Verbindung, insbesondere durch Zugabe von Alkoholen wie Methanol, Ethanol, n-Propanol, Isopropanol, n-Butanol, Isobutanol, sec.-Butanol oder tert.-Butanol, oder deren Mischungen mit Wasser. Vorzugsweise werden die zur Deaktivierung verwendeten Substanzen in einem Verdünnungsmittel, beispielsweise einem der obengenannten Lösungsmittel, eingesetzt, um eine unerwünschte Viskositätssteigerung zu vermeiden. Im Übrigen sei auch hier auf den eingangs zitierten Stand der Technik zur Polymerisation von Bortrifluorid mit Isobuten verwiesen, dessen Maßnahmen zur Aufarbeitung in analoger Weise auf das erfindungsgemäße Verfahren übertragen werden können.

Vorzugsweise wird das zur Deaktivierung verwendete Mittel oder dessen Mischung mit einem inerten Lösungsmittel vor der Deaktivierung auf Polymerisationstemperatur abgekühlt, um unerwünschte Nebenreaktionen zu vermeiden. Hiernach wird man in der Regel auf Temperaturen oberhalb 0°C erwärmen und die Reaktionsmischung mit Wasser oder Methanol oder einer Mischung davon waschen. Nach Abtrennung wässriger Bestandteile wird die Mischung gegebenenfalls getrocknet.

Anschließend werden in der Regel die Lösungsmittel in geeigneten Aggregaten, beispielsweise in Rotations-, Fallfilm- oder Dünnschichtverdampfern oder durch Flash-Verdampfung (Entspannung der Reaktionslösung hinter einem Rohrbündel-Wärmetauscher in Rohrleitungen oder durch eine Loch/Düsenplatte) entfernt. In der Regel wird man zur Entfernung des Lösungsmittels Unterdruck, z.B. im Bereich von 0,1 bis 800 mbar, bevorzugt 1 bis 100 mbar, anlegen. Die Sumpftemperatur beträgt vorzugsweise 50°C bis 250°C und insbesondere 150°C bis 230°C. Die Anwendung erhöhter Temperaturen, z.B. oberhalb 150°C, insbesondere 170°C oder höher, führt zu einer weiteren Verringerung von Restchlorgehalten und somit zu einem erhöhten Anteil an terminalen Doppelbindungen im Reaktionsprodukt.

Die so hergestellten Polyisobutene weisen einen hohen Gehalt an olefinisch ungesättigten Endgruppen der allgemeinen Formel (A) und/oder (B) auf. Der Endgruppengehalt liegt in der Regel bei wenigstens 80 mol-%, insbesondere wenigstens 90 mol-%, und besonders bevorzugt wenigstens 95 mol-%, bezogen auf die Polymerketten. Die auf diese Weise hergestellten Polyisobutene weisen eine enge Molekulargewichtsverteilung auf, die durch eine Polydispersität D = M_{W}/M_{N} unterhalb 1,4, vorzugsweise unterhalb 1,3, und insbesondere unterhalb 1,2, z.B. im Bereich von 1,05 bis 1,2 charakterisiert ist.

Vorteilhafterweise zeichnen sich die auf diese Weise erhaltenen Polyisobutene neben der geringen Polydispersität auch dadurch aus, dass das Maximum der Molekulargewichtsverteilung M_{P} weniger als 10 % über dem Wert des zahlenmittleren Molekulargewichts liegt. In vielen Fällen liegt das Peakmaximum Mp sogar weniger als 8 % oder sogar weniger als 6 % oberhalb dem Wert des zahlenmittleren Molekulargewichts.

Alle Angaben zu Molekulargewichten beziehen sich auf Werte, wie sie mittels Gelpermeationschromatographie (GPC) ermittelt wurden. Die Gelpermeationschromatographie erfolgte mit THF als Fließmittel und CS₂ als Referenz an zwei hintereinander geschalteten Säulen (L=300 mm, d=7,8 mm), wobei die erste Säule mit Styragel HR5 (Molekulargewichtsbereich 50000 bis 4x10⁶) und die zweite Säule mit Styragel HR3 (Molekulargewichtsbereich 200 bis 30000) der Fa. Waters gepackt waren. Die Detektion erfolgte über ein Differentialrefraktometer. Als Standards zur Bestimmung des Isobutenblocks wurden käufliche Polyisobutenstandards im Molmassenbereich 224 bis 1000000 der Fa. Polymer-Standards Service, Mainz, eingesetzt. Die Auswertung der Elutionsdiagramme hinsichtlich der Polydispersität M_{W}/M_{N} erfolgte dergestalt, dass für handelsübliches Polyisobuten der Molmasse 1000 (Glissopal®1000 der BASF-Aktiengesellschaft) der Referenzwert 1,7 erhalten wird.

Die so erhaltenen Polyisobutene können dann in an sich bekannter Weise sukzessiv mit Maleinsäureanhydrid und anschliessend mit dem Alkohol, Amin oder Aminoalkohol oder einer Mischung davon umgesetzt werden. Verfahren hierzu sind z.B. aus DE-A 27 02 604, US 4,152,499, US 5,137,980 sowie der DE-A 43 19 672 bekannt, auf die hiermit Bezug genommen wird.

Hierzu wird in einem ersten Schritt das Polyisobuten in an sich bekannter Weise thermisch mit Maleinsäureanhydrid umgesetzt. Maleinsäureanhydrid und Polyisobuten werden hierzu in der Regel in einem Molverhältnis im Bereich von 0,7:1 bis 4,0:1, vorzugsweise 0,8:1 bis 2,5:1 und insbesondere 0,9:1 bis 1:1,5 miteinander umgesetzt. Überschüssiges unumgesetztes Maleinsäureanhydrid kann gegebenenfalls nach beendeter Reaktion extraktiv oder destillativ, beispielsweise durch Strippen mit Inertgas bei erhöhter Temperatur und/oder unter vermindertem Druck, aus dem Reaktionsgemisch entfernt werden.

Die Umsetzung wird in der Regel bei einer Temperatur im Bereich von 100 bis 300°C, vorzugsweise 120 bis 270°C und insbesondere 150 bis 250°C durchgeführt. Die Reaktionszeit liegt in der Regel zwischen 50 Minuten und 20 Stunden und vorzugsweise im Bereich von 1 bis 6 Stunden.

Die Umsetzung wird vorzugsweise unter Ausschluss von Sauerstoff und Wasser durchgeführt, um unerwünschte Nebenreaktionen zu verhindern. Allerdings kann der Umsetzungsgrad in Gegenwart von Luft oder wenigen ppm Halogen wie Brom höher liegen als unter Inert-Bedingungen. Vorzugsweise wird die Reaktion daher mit entsprechend gereinigten Edukten und in einer Inertgasatmosphäre, z.B. unter getrocknetem Stickstoff, durchgeführt, da man aufgrund der geringeren Bildung von Nebenprodukten auf einen anschließenden Filtrationsschritt verzichten kann.

Gewünschtenfalls kann die Umsetzung in einem unter den Reaktionsbedingungen inerten Lösungsmittel durchgeführt werden, beispielsweise um eine geeignete Viskosität des Reaktionsgemisches einzustellen oder um Kristallisation von Maleinsäureanhydrid an kälteren Stellen des Reaktors zu vermeiden. Beispiele für geeignete Lösungsmittel sind aliphatische Kohlenwasserstoffe und Gemische davon, beispielsweise die vorstehend genannten, insbesondere Paraffine und Öle mit einem Siedepunkt oberhalb der Reaktionstemperatur sowie aromatische Kohlenwasserstoffe und Halogenkohlenwasserstoffe wie Toluol, Xylol, Isopropylbenzol, Chlorbenzol und Dichlorbenzol, sowie Gemische der vorgenannten Lösungsmittel.

Das im ersten Schritt mit Maleinsäureanhydrid funktionalisierte Polyisobuten PIB-MSA wird anschließend mit der Verbindung I umgesetzt, wobei das Molverhältnis von PIB-MAS zu Verbindung I in der Regel im Bereich von 0,4:1 bis 4:1 und vorzugsweise 0,5:1 bis 3:1 liegt. Bei Verbindungen mit nur einer primären oder sekundären Aminogruppe wird man häufig wenigstens äquimolare Mengen an Amin einsetzen.

Bei Verwendung von den bevorzugten primären Aminen können sich durch Reaktion mit der Maleinsäureanhydrid-Gruppe des funktionalisierten Polyisobutens auch Amid- und/oder Imid-Strukturen bilden, wobei die Reaktionsbedingungen vorzugsweise so gewählt werden, dass sich Imid-Strukturen bilden, da die dabei erhaltenen Produkte aufgrund ihrer besseren anwendungstechnischen Eigenschaften bevorzugt sind.

Besonders bevorzugte Amine mit wenigstens zwei, vorzugsweise primären Aminogruppen sind zur Ausbildung von erfindungsgemäss besonders bevorzugten Bisamiden bzw. Bisimiden in der Lage. Vorzugsweise wird man zur Herstellung der Bisimide das Amin in etwa der gewünschten Stöchiometrie einsetzen. Bevorzugt setzt man die diese Diamine in einer Menge weniger als 1 Mol, insbesondere in einer Menge von 0,3 bis 0,95 Mol und besonders bevorzugt in einer Menge von 0,4 bis 0,9 Mol je Mol PIB-MSA ein.

Die Umsetzung des mit Maleinsäureanhydrid funktionalisierten Polyisobutens mit der Verbindung I wird je nach Reaktivität der verwendeten Verbindung I in der Regel bei einer Temperatur im Bereich von 25 bis 300°C, vorzugsweise 50 bis 200°C und insbesondere 70 bis 170°C, gegebenenfalls unter Verwendung eines Amidierungskatalysators durchgeführt. Überschüssige unumgesetzte Verbindung I kann gegebenenfalls nach beendeter Reaktion extraktiv oder destillativ, beispielsweise durch Strippen mit Inertgas bei erhöhter Temperatur und/oder unter vermindertem Druck, aus dem Reaktionsgemisch entfernt werden. Vorzugsweise führt man die Reaktion bis zu einem Umsatz der Komponenten von wenigstens 90 % und insbesondere 95 % durch (bezogen auf die im Unterschuss eingesetzte Komponente), wobei der Reaktionsfortschritt anhand der Wasserbildung mittels üblicher analytischer Methoden verfolgt werden kann, z.B. über die Säurezahl. Die Bildung von Verbindungen mit Imidstruktur aus solchen mit Amidstruktur läßt sich mittels IR-Spektrometrie verfolgen.

Die erfindungsgemässen Derivate des Polyisobutens zeichnen sich durch ein verbessertes Viskositätsverhalten bei zumindest vergleichbarer Dispergierwirkung wie kommerzielle Produkte mit vergleichbarem zahlenmittleren Molekulargewicht aus. Sie können daher in höheren Konzentrationen eingesetzt werden als kommerzielle Dispergatoren, ohne dass Nachteile im Viskositätsverhalten des Schmierstoffs zu befürchten sind, was insbesondere im Hinblick auf verlängerte Ölwechselintervalle von Interesse ist.

Überraschenderweise führen auch Mischungen der erfindungsgemäßen Polyisobutenylderivate, die einen Bestandteil mit einem niedrigeren Molekulargewicht und einen weiteren Bestandteil mit einem höheren Molekulargewicht enthalten, zu besseren anwendungstechnischen Eigenschaften als ein aus einem handelsüblichen Polyisobuten gewonnenes Derivat, dessen gewichtsmittleres Molekulargewicht M_{w} dem Mittelwert der gewichtsmittleren Molekulargewichte dieser Mischung entspricht. Dementsprechend sind auch Mischungen der erfindungsgemäßen Polyisobutenyl-Derivate Gegenstand der vorliegenden Erfindung. Das Massenverhältnis von nieder- und höhermolekularem Bestandteil kann dabei im Bereich von 1:10 bis 10:1 liegen. Die Mischung kann bereits auf der Stufe des Polyisobutens erfolgen. Bevorzugt vermischt man jedoch das nieder- und das höhermolekulare Polyisobutenyl-Derivat, da dann noch bessere anwendungstechnische Eigenschaften erhalten werden.

Aus diesem Grund betrifft ein weiterer Aspekt der vorliegenden Erfindung die Verwendung der erfindungsgemässen Polyisobuten-Derivate als Additive in flüssigen Schmierstoffzusammensetzungen, insbesondere in Schmierölen für Verbrennungsmotoren wie Otto-, Wankel-, Zweitakt und Dieselmotoren und speziell in Leichtlaufmotorenölen. Unter Leichtlaufmotorenölen versteht man Öle für Verbrennungsmotoren, deren dynamische Viskosität bei -35°C unterhalb 60000 mPa•s liegt (ASTM/D 4684) und deren dynamische Viskosität bei -25°C unterhalb 3500 mP•as liegt (nach DIN 51377).

Die erfindungsgemässen Polyisobuten-Derivate werden den Schmierstoffen in der Regel in Form einer 50 bis 60 %igen Mineralöl-Lösung, üblicherweise in einer Menge von 0,5 bis 25 Gew.-%, vorzugsweise in einer Menge von 1 bis 20 Gew.-% und insbesondere 2 bis 15 Gew.-% Lösung (bezogen auf eine 50 gew.-%ige Lösung), bezogen auf das Gesamtgewicht der Zusammensetzung zugesetzt. Schmierstoffzusammnensetzungen, die diese Mengen an erfindungsgemässen Polyisobuten-Derivaten enthalten, sind daher ebenfalls Gegenstand der vorliegenden Erfindung.

Als Schmierstoffe kommen grundsätzlich alle flüssigen Schmierstoffe (siehe oben), vorzugsweise Öle für Verbrennungsmotoren in Kraftfahrzeugen, also Öle für Otto-, Wankel-, Zweitakt- und Dieselmotoren, in Betracht, insbesondere Leichtlaufmotorenöle und speziell der Viskositätsklassen 5 W bis 20 W nach DIN 51511.

Die flüssigen Schmierstoffe können in üblicher Weise additiviert sein, d.h. sie enthalten neben den für den Verwendungszweck typischen Grundölkomponenten, z.B. mineralische oder synthetische Kohlwasserstoffe, Polyether oder Ester und Mischungen, noch übliche von Dispergatoren verschiedene Additive wie Detergensadditive, Antioxidantien, Viskositätsindex-Verbesserer, Pour-Point-Verbesserer, Reibungsverminderer, Entschäumer, Korrosionsinhibitoren, etc. in den hierfür üblichen Mengen. Eine Übersicht über geeignete Additive findet man in D. Klamann, "Lubricants and Related Products - Additives" in Ullmanns Encyclopedia of Industrial Chemistry, 5th ed. on CD-ROM, WILEY-VCH 1999.

Selbstverständlich können die erfindungsgemässen Additive auch zusammen mit anderen Additiven mit Dispergierwirkung eingesetzt werden, wobei der Anteil der erfindungsgemässen Polyisobuten-Derivate an der Gesamtmenge an dispergieraktiven Additiven in der Regel wenigstens 30 Gew.-% und vorzugsweise wenigstens 60 Gew.-% beträgt.

Überraschenderweise hat sich in Zusammenhang mit den erfindungsgemässen Dispergatoren gezeigt, dass Polyisobutene mit einer Molekulargewichtsverteilung, die durch ein Maximum Mₚ im Bereich von 20000 bis 120000 und eine Polydispersität M_{W}/M_{N} < 1,4 charakterisiert sind, in hervorragender Weise das Viskositätsverhalten von flüssigen Schmierstoffzusammensetzungen, insbesondere von synthetischen und/oder mineralischen Kohlenwasserstoffen, wie sie bei Verbrennungsmaschinen, insbesondere KFZ-Motoren Verwendung finden, verbessern.

Insbesondere führen sie zu einer verbesserten Aufdickung bei hohen Temperaturen, einem verbesserten Viskositätsverhalten bei niedrigen Temperaturen und einer besseren Scherstabilität des Schmierstoffes im Vergleich zu bekannten Viskositätsindex-Verbessereren (VI-Verbesserern) auf Basis von Polyisobutenen oder Olefincopolymeren (OCP = Ethen/Propencopolymere).

Die Herstellung der als VI-Verbesserer geeigneten Polyisobutene kann ebenfalls auf die oben beschriebene Weise erfolgen wobei man jedoch zur Erzielung eines höheren Molekulargewichts die Verbindung II in geringeren Mengen, vorzugsweise in einer Menge von 10⁻⁴ bis 10⁻² Mol pro Mol Isobuten und insbesondere in einer Menge von 5x10⁻⁴ bis 5x10⁻³ Mol pro Mol Isobuten einsetzt. Das Mengenverhältnis von Lewissäure zu Verbindung II wird in der Regel aufgrund der geringeren Konzentration von Verbindung II den Wert 1:1 überschreiten und kann bis 1:20 betragen. Vorzugsweise liegt es im Bereich von 1:30 bis 1:20. Das Mengenverhältnis von Donor III zu Lewis-Säure liegt vorzugsweise im Bereich von 1:100 bis 1:1, insbesondere im Bereich von 1:50 bis 1:1,1 und besonders bevorzugt im Bereich von 1:20 bis 1:1,5. Im übrigen gilt das zur Herstellung von PIB mit einem Molekulargewicht im Bereich von 500 bis 20000 gesagte.

Die so erhaltenen PIB sind durch eine Molekulargewichtsverteilung mit einem Maximum Mₚ im Bereich von > 20000 bis 120000 und einer Polydispersität M_{W}/M_{N} unterhalb von 1,4 charakterisiert und können als solche, oder nach einer üblichen Funktionalisierung oder Hydrierung der terminalen Doppelbindung als VI-Verbesserer in flüssigen Schmierstoffen, insbesondere in den als bevorzugt angegebenen Schmierstoffen eingesetzt werden. Sie führen zu einem mit konventionellen Polyisobutenylderivaten der Bernsteinsäure vergleichbaren Viskositätsverhalten bei geringer Temperatur, weisen aber eine bessere Scherstabilität auf. Die aufdickende Wirkung ist mit der bekannter VI-Verbesserer auf der Basis von Polyisobutenen mit gleichem gewichtsmittleren Molekulargewicht M_{w} vergleichbar oder häufig besser, so dass geringere Mengen zur Erreichung der Spezifikation benötigt werden. Die Konzentration derartiger PIB in Schmierstoffen, insbesondere in Leichtlaufmotorenölen liegt in den hierfür üblichen Bereichen, z.B. im Bereich von 0,1 bis 20 Gew.-%, insbesondere 0,2 bis 10 Gew.-% und besonders bevorzugt 0,5 bis 5 Gew.-% bezogen auf das Gesamtgewicht der Zusammensetzung.

Die nachfolgenden Beispiele sollen die Erfindung verdeutlichen, ohne sie einzuschränken.

### I. Analytik

Die Bestimmung des Molekulargewichts (M_{N}, M_{W}) erfolgte in der oben beschriebenen Weise mittels GPC, Massenspektrometrie und/oder mittels ¹H-NMR-Spektroskopie. Der Doppelbindungsanteil wurde mittels ¹H-NMR-Spektroskopie (Integration der Vinylprotonen gegen Methyl- und Methylenprotonen) oder über den Chlorgehalt ermittelt. Der Restchlorgehalt wurde elementaranalytisch bestimmt.

### II. Herstellung der Polyisobuten-Derivate

### IIa. Herstellung der Polyisobutene (Herstellungsbeispiele 1 bis 3)

### 1. Herstellung eines Polyisobutens mit Mₙ von 2300

Als Reaktionsgefäß wurde ein 2 1-Vierhalskolben eingesetzt, der mit Trockeneiskühler, 1 1-Tropftrichter mit Bett aus Molekularsieb (3 Å; 500 ml; 16 h bei 150 °C/2 mbar getrocknet) und Trockeneiskühler, Thermometer, Septum, Magnetrührer und einem weiteren 1 1-Tropftrichter, der ein Bett aus Molekularsieb (3 Å; 300 ml; 16 h bei 150°C und 2 mbar getrocknet) und darüber ein Bett aus 250 ml eines sauren Ionenaustauschers (Lewatit K 2621 der Fa. Bayer AG; 16 Stunden bei 150°C und 2 mbar getrocknet) sowie einen Trockeneiskühler aufweist, ausgerüstet ist. Das Reaktionsgefäß wurde durch zweimaliges Evakuieren und Spülen mit trockenem Stickstoff getrocknet. In den Tropftrichter mit Molekularsieb und Ionenaustauscher wurde eine auf -78°C vorgekühlte Mischung aus 600 ml getrocknetem Methylenchlorid und 200 ml getrocknetem Hexan gegeben, so dass Molekularsieb und Ionenaustauscher bedeckt waren. Das Lösungsmittelgemisch wurde nach 15 min innerhalb von 30 min in den Reaktionskolben getropft. In den anderen Tropftrichter (mit Molekularsieb) wurden 448,9 g (8 mol, 750 ml) Isobuten derart einkondensiert, dass Isobuten auf einer weiteren Pakkung von 250 ml Molekularsieb 3 Å mit einer mittleren Verweilzeit von 15 min, bezogen auf das Totvolumen des Molekularsiebs getrocknet wurde. Dieses Isobuten wurde mit einer mittleren Verweilzeit auf Molekularsieb im Tropftrichters von 15 Minuten innerhalb von insgesamt 25 Minuten in den Reaktionskolben getropft. Unter Rühren wurden über das Septum 0,38 g (2 mmol) 2,6-Di-tert.-Butylpyridin und 45,1 g (0,22 mol) Tetraisobutenylchlorid zugegeben und der Reaktionskolben mit Trockeneis auf -70°C gekühlt. Dann wurden über das Septum 22,8 g (0,12 mol) Titantetrachlorid unter starkem Rühren zugegeben. Die nun einsetzende Polymerisation ist an der Temperaturerhöhung im Reaktionsgefäß zu erkennen. Nach 5 Minuten wurd die Reaktion durch Zusatz von 77 ml (1 mol) Isopropanol beendet, das Reaktionsgemisch auf 0°C erwärmt und dreimal mit je 200 ml Wasser gewaschen, über Natriumsulfat getrocknet und bei 200°C bis zum Enddruck von 2 mbar im Vakuum vom Lösungsmittel befreit und anschliessend mit basischem Aluminiumoxid behandelt.

Ausbeute: 490 g klares Öl, M_{N} = 2300 D, M_{P} = 2350, D = 1,18; Viskosität bei 100°C: 1250 mm²/s; Chlorgehalt unter 12 ppm, Gehalt olefinischer Endgruppen A: 65 Mol-%, Endgruppen B: 30 Mol-%.

### 2. Herstellung eines Polyisobutens mit Mₙ von 3900

Die Umsetzung wurde analog zu Herstellungsbeispiel 1 durchgeführt, jedoch wurden 200 ml Methylenchlorid, 366,7 g (6 mol) Isobuten, 16,4 g (80 mmol) Tetraisobutenylchlorid und 7,6 g (40 mmol) Titantetrachlorid eingesetzt.

Ausbeute: 340 g klares Öl, M_{N} = 3900, M_{P} = 4100, M_{W} = 4300, D = 1,19; Viskosität bei 100°C: 3200 mm²/s; Chlorgehalt unter 1 ppm, Gehalt olefinischer Endgruppen A: 65 Mol-%, Endgruppen B: 28 Mol-%.

### 3. Herstellung eines Polyisobutens mit Mₙ von 74000

Herstellungsbeispiel 3 wurde analog zu Herstellungsbeispiel 1 durchgeführt, jedoch wurden 600 ml Hexan, 200 ml Methylchlorid, 224,4 g (4 mol) Isobuten, 1,23 g (6 mmol) Tetraisobutenylchlorid und 11,4 g (60 mmol) Titantetrachlorid eingesetzt; Methylchlorid wurde zusammen mit Isobuten einkondensiert und zugetropft; die Reaktionszeit betrug 20 Stunden bei -78°C.

Ausbeute: 220 g klares Öl, M_{N} = 74000, Mp = 80000, D = 1, 11; die Viskosität einer Lösung von 2 g des Polyisobutens in 10 ml Isooctan betrug bei 20°C 1,30 mm²/s; Chlorgehalt 9 ppm (auf eine Nachbehandlung mit Al₂O₃ wurde verzichtet).

### IIa. Herstellung der Polyisobuten-Bernsteinsäure-Derivate

### Beispiel 1:

400 g des aus Herstellungsbeispiel 1 erhaltenen Polyisobutens wurden mit 4 g 2-Propanol in einem 1,2 1-Rührautoklaven mit Tellerrührer bei einem Druck von 10 mbar auf 160°C erhitzt. Dann wurden bei geschlossenen Vakuumleitungen 25,5 g flüssiges Maleinsäureanhydrid direkt auf den Tellerrührer dosiert, wobei man gleichzeitig erwärmte. Bei Beendigung der Zudosierung betrug die Innentemperatur 205°C, nach weiteren 10 min 225°C. Man rührte des Autoklaveninhalt weitere 4 Stunden bei 225°C, wobei der Druck im Reaktor zunächst auf 1 bar Überdruck abfiel, dann auf 2 bar anstieg. Dann wurde die Heizung des Autoklaven abgestellt und vorsichtig entspannt. Anschließend legte man bei 200°C langsam Vakuum an, sodass abgasendes Maleinsäureanhydrid nicht zum Schaumaustritt führte. Auf diese Weise entfernte man bis zu einem Endvakuum von 1 mbar bei 200°C nicht umgesetztes Maleinsäureanhydrid. Der Wirksubstanzgehalt wurde anschließend mittels Säulenchromatographie bestimmt und betrug 81%. Die Verseifungszahl betrug 46 mg KOH/g Substanz. 400 g des so erhaltenen Produkts (0,164 Mol) Polyisobutensuccinanhydrid (PIBSA) wurden mit 15,53 g Tetraethylenpentamin (0,082 Mol TEPA) bei einer Temperatur von 180°C 4 Stunden in einem Rotationsverdampfer umgesetzt. Danach wurde 15 min ein Druck von 1 mbar eingestellt. Anschließend fügte man hierzu soviel eines niederviskosen Mineralöls (SN 100), dass die Konzentration an Wirkprodukt 60 Gew.-% betrug.

### Beispiel 2:

Das aus Herstellungsbeispiel 2 erhaltene Polyisobuten wurde analog Beispiel 1 umgesetzt. Nach der ersten Stufe betrug der Wirksubstanzgehalt etwa 75 Gew.-%, die Verseifungszahl lag bei 22 mg KOH/g Produkt.

### Vergleichsbeispiel 1:

Handelsübliches Polyisobuten mit M_{W} = 1630, M_{N} = 1000 und einer Polydispersität von 1,63 wurde analog Beispiel 1 umgesetzt.

### Vergleichsbeispiel 2:

Handelsübliches Polyisobuten mit M_{W} = 4370, M_{N} = 2300 und einer Polydispersität von 1,90 wurde analog Beispiel 1 umgesetzt.

### III Anwendungstechnische Prüfung

### 1. Dispergierwirkung

Zur Bewertung der Dispergierwirkung wurde ein Tüpftest gemäß "Les Huiles pour Moteurs et la Graissage des Moteurs" von A. Schilling, 1962, Vol. 1, Seite 89 ff, durchgeführt. Dazu wurde eine Dieselrußöl-Dispersion mit einem Gehalt von 3 Gew.-% des zu prüfenden Additivs hergestellt. Ein Tropfen der Dispersion wurde zur Papierchromatographie auf ein Filterpapier aufgetragen und die Rußwanderung visuell bewertet und zwar anhand einer Skala von 0 bis 1000. Je höher der Wert war, desto besser war die Dispergierwirkung. Tabelle 1 zeigt die Ergebnisse.

### 2. Viskosität bei hohem Schergefälle

Die Bestimmung der Viskosität bei hohem Schergefälle erfolgte nach DIN 51377. Hierzu wurden die Additive der Beispiele 1 und 2 und des Vergleichsbeispiels 1 jeweils mit einer üblichen Leichtlaufölformulierung in einer Menge von 5 Gew.-%, bezogen auf die Formulierung abgemischt. Die Ergebnisse sind in Tabelle 1 angegeben. Mit den Beispielen 1 und 2 wurde die Spezifikation 0W-30 erreicht, nicht jedoch mit dem Vergleichsbeispiel V1 und V2.

**Tabelle 1**

| Versuch | PIB-Derivat Bsp. | Dispergierwirkung | Viskosität bei -30°C [mPa•s] |
|---|---|---|---|
| 1 | 1 | 665 | 3000 |
| 2 | 2 | 685 | 3200 |
| 3 | V2 | 635 | 3400 |

### 3. Scherstabilität

Die Bestimmung der Scherstabilität des Öls erfolgte durch Ermittlung des Viskositätsverlusts in einer Boschdüse nach DIN 51382 (Angaben in %, bezogen auf Ausgangsviskosität). Hierzu wurde eine Leichtlaufmotorenölformulierung 5W-40 mit dem Polyisobuten aus Herstellungsbeispiel 3 (PIB 3) spezifikationsgerecht für 10W40 additiviert.

Zu Vergleichzwecken wurde jeweils eine Leichtlaufölformulierung mit einem Olefincopolymeren OCP (Charakterisierung) und mit einem handelsüblichen Polyisobuten (PIB V2) mit einem Molekulargewicht M_{N} von 74000 und einer Polydispersität von 3,0 spezifikationsgerecht für 5W-40 Motorenöl additiviert. Die jeweils erforderlichen Mengen und Ergebnisse sind in Tabelle 2 angegeben.

**Tabelle 2**

| Versuch | Polymer | Menge [Gew.%] | Scherverlust |
|---|---|---|---|
| 4 | PIB 3 | 1,5 | 4 % |
| 5 | PIBV2 | 2,5 | 15 % |
| 6 | OCP | 1,5 | 10 % |

## Patentansprüche

1. Polyisobutenyl-Derivate der Bernsteinsäure, erhältlich durch:
i) Umsetzung eines Polyisobutens mit einem Gehalt reaktiver Endgruppen von wenigstens 80%, dessen Molekulargewichtsverteilung durch ein Maximum Mp der Verteilungskurve im Bereich von 500 bis 20000 Dalton und ein Verhältnis von gewichtsmittlerem Molekulargewicht zu zahlenmittlerem Molekulargewicht H_{W}/H_{N} unterhalb von 1,4 charakterisiert ist, mit Maleinsäure oder Maleinsäureanhydrid;
ii) Umsetzung des in i) erhaltenen Polyisobuten-Bernsteinsäure-Derivats mit wenigstens einer Verbindung I die wenigstens eine primäre oder sekundäre Aminogruppe und/oder eine OH-Gruppe aufweist, unter Bildung einer Amid- oder Ester-Bindung.

2. Polyisobutenyl-Derivat nach Anspruch 1, worin das Polyisobuten eine Molekulargewichtverteilung mit einem Maximum Mp im Bereich von 1500 bis 15000 aufweist.

3. Polyisobutenyl-Derivat nach Anspruch 1 oder 2, worin die Verbindung I wenigstens eine primäre Aminogruppe aufweist.

4. Polyisobutenyl-Derivat nach Anspruch 3, worin die Verbindung I ausgewählt ist unter Diaminen der allgemeinen Formel Ia,
B₂N-(R-NH)ₘ-A-(NB-R')ₙ-NH₂ (Ia)
worin
A für C₂-C₂₀-Alkylen, das durch ein oder mehrere, nicht benachbarte Sauerstoffatome unterbrochen sein kann, oder für C₅-C₂₀-Cycloalkylen steht;
R, R' unabhängig voneinander für C₂-C₄-Alkylen stehen und
n, m unabhängig voneinander für 0 bis 5 stehen.

5. Verfahren zur Herstellung von Polyisobutenyl-Derivaten gemäß einem der vorhergehenden Ansprüche, **dadurch gekennzeichnet, dass** man
- Isobuten in Gegenwart eines Initiatorsystems, umfassend
a) eine Lewis-Säure, ausgewählt unter kovalenten Metallchloriden und Halbmetallchloriden,
b) und wenigstens eine Verbindung II mit wenigstens einer funktionellen Gruppe FG, die unter Polymerisationsbedingungen ein Carbokation oder einen kationogenen Komplex bildet, wobei FG ausgewählt ist unter Halogen, Acyloxy und Alkoxy, die an ein sekundäres oder tertiäres aliphatisches C-Atom, an ein allylisches oder an ein benzylisches C-Atom gebunden sind,
in einem gegenüber der Lewis-Säure inerten Lösungsmittel bei einem Molverhältnis von Lewis-Säure zu Verbindung II im Bereich von 10:1 bis 1:100 polymerisiert, wobei man ein Polyisobuten mit einem Gehalt olefinischer Endgruppen von wenigstens 80 Mol-% erhält, dessen Molekulargewichtsverteilung ein Maximum Mp im Bereich von 500 bis 20000 und eine Polydispersität M_{W}/M_{N} unterhalb von 1,4 aufweist, und
- das so erhaltene Polyisobuten sukzessiv mit Maleinsäure oder Maleinsäureanhydrid und anschließend mit einer Verbindung I, die wenigstens eine primäre oder sekundäre Amingruppe und/oder OH-Gruppe aufweist, umsetzt.

6. Verfahren nach Anspruch 5, worin die Verbindung II ausgewählt ist unter Verbindungen der allgemeinen Formel
CH₃-C(CH₃)₂-[CH₂-C(CH₃)₂]ₖ-X
worin k für 0, 1, 2, 3 oder 4 steht und X für Halogen, Alkyloxy oder Acyloxy steht.

7. Verfahren nach Anspruch 5 oder 6, **dadurch gekennzeichnet, dass** man die Verbindung II in einer Menge von 0,001 bis 0,3 mol je mol Isobuten einsetzt.

8. Verfahren nach einem der Ansprüche 5 bis 7, **dadurch gekennzeichnet, daß** die Lewis-Säure ausgewählt ist unter Titan(IV)chlorid und Bortrichlorid.

9. Verfahren nach einem der Ansprüche 5 bis 8, **dadurch gekennzeichnet, dass** das Initiatorsystem zusätzlich wenigstens eine aprotisch polare Verbindung III aufweist, die zur Komplexbildung mit der Lewis-Säure oder dem unter Reaktionsbedingungen gebildeten Carbokation oder kationogenen Komplex aus Lewis-Säure und Verbindung II geeignet ist.

10. Verfahren nach Anspruch 9, **dadurch gekennzeichnet, dass** die Verbindung III ausgewählt ist unter Pyridin, Alkylpyridinen und nicht polymerisierbaren, aprotischen siliziumorganischen Verbindungen mit wenigstens einer Si-O-Bindung.

11. Verfahren nach einem der Ansprüche 8 oder 9, **dadurch gekennzeichnet, dass** man die Verbindung II und die Verbindung III in einem Molverhältnis von III:II im Bereich von 1:1 bis 1:1000 einsetzt.

12. Verfahren nach einem der Ansprüche 5 bis 11, **dadurch gekennzeichnet, dass** das Lösungsmittel für die Polymerisation ausgewählt ist unter Kohlenwasserstoffen mit 2 bis 10 C-Atomen, inerten Halogenkohlenwasserstoffen 1 bis 3 C-Atomen und deren Mischungen.

13. Verfahren nach einem der Ansprüche 5 bis 12, **dadurch gekennzeichnet, daß** man zur Gewinnung der Polyisobutene das Lösungsmittel bei Temperaturen von wenigstens 150°C entfernt.

14. Verwendung eines Polyisobuten-Derivats gemäss Anspruch 1 als als Additive in Schmierstoffzusammensetzungen.

15. Schmierstoffzusammensetzung, enthaltend neben üblichen Additivkomponenten wenigstens ein Polyisobuten-Derivat gemäß Anspruch 1 in Mengen von 0,5 bis 25 Gew.-%, bezogen auf das Gesamtgewicht der Zusammensetzung.

16. Schmierstoffzusammensetzung nach Anspruch 15 in Form eines Leichtlaufmotorenöls.

17. Verwendung von Polyisobutenen mit einem Maximum M_{P} der Molekulargewichtsverteilung im Bereich von > 20000 bis 120000 und einer Polydispersität M_{W}/M_{N} unterhalb von 1,4 zur Verbesserung des Viskositätsindexes von Schmierstoffzusammenseztungen.

18. Schmierstoffzusammensetzung enthaltend wenigstens ein Polyisobuten mit einem Maximum Mp der Molekulargewichtsverteilung im Bereich von > 20000 bis 120000 und einer Polydispersität M_{w}/M_{N} unterhalb von 1,4 in einer Menge von 0,5 bis 5 Gew.-%, bezogen auf das Gesamtgewicht der Zusammensetzung.

19. Schmierstoffzusammensetzung nach Anspruch 18, enthaltend zusätzlich wenigstens ein Polyisobuten-Derivat der Bernsteinsäure gemäß den Ansprüchen 1 bis 4 in einer Menge von 0,5 bis 25 Gew.-%.

## Claims

1. A polyisobutenyl derivative of succinic acid obtainable by:
i) reacting a polyisobutene which has a reactive end group content of at least 80% and whose molecular weight distribution is **characterized by** a maximum M_{P} in the distribution curve in the range from 500 to 20 000 daltons and a ratio of weight average molecular weight to number average molecular weight M_{W}/M_{N} of below 1.4 with maleic acid or maleic anhydride;
ii) reacting the polyisobutene-succinic acid derivative obtained in i) with at least one compound I which has at least one primary or secondary amino group and/or an OH group to form an amide or ester bond.

2. The polyisobutenyl derivative according to claim 1 where the polyisobutene has a molecular weight distribution having a maximum M_{P} in the range from 1500 to 15 000.

3. The polyisobutenyl derivative according to claim 1 or 2 where the compound I has at least one primary amino group.

4. The polyisobutenyl derivative according to claim 3 where the compound I is selected from diamines of the general formula Ia
H₂N-(R-NH)ₘ-A-(NH-R')ₙ-NH₂ (Ia)
where
A is C₂-C₂₀-alkylene which may be interrupted by one or more nonadjacent oxygen atoms or is C₅-C₂₀-cycloalkylene;
R, R' are each independently C₂-C₄-alkylene and
n, m are each independently from 0 to 5.

5. A process for preparing polyisobutenyl derivatives according to any of the preceding claims which comprises
- polymerizing isobutene in the presence of an initiator system comprising
a) a Lewis acid selected from covalent metal chlorides and semimetal chlorides,
b) and at least one compound II having at least one functional group FG which forms a carbocation or a cationic complex under polymerization conditions and is selected from halogen, acyloxy and alkoxy which are bonded to a secondary or tertiary aliphatic carbon atom, to an allylic carbon atom or to a benzylic carbon atom,
in a solvent which is inert toward the Lewis acid at a molar ratio of Lewis acid to compound II in the range from 10:1 to 1:100 to obtain a polyisobutene having an olefinic end group content of at least 80 mol% whose molecular weight distribution has a maximum M_{P} in the range from 500 to 20 000 and a polydispersity M_{W}/M_{N} below 1.4, and
- reacting the polyisobutene obtained in this manner successively with maleic acid or maleic anhydride and then with a compound I which has at least one primary or secondary amine group and/or OH group.

6. The process according to claim 5 where the compound II is selected from compounds of the general formula
CH₃-C(CH₃)₂-[CH₂-C(CH₃)₂]ₖ-X
where k is 0, 1, 2, 3 or 4 and X is halogen, alkyloxy or acyloxy.

7. The process according to claim 5 or 6, wherein the compound II is used in a quantity of from 0.001 to 0.3 mol per mole of isobutene.

8. The process according to any of claims 5 to 7, wherein the Lewis acid is selected from titanium(IV) chloride and boron trichloride.

9. The process according to any of claims 5 to 8, wherein the initiator system additionally has at least one aprotic polar compound III which is suitable for complex formation with the Lewis acid or with the carbocation or cationic complex formed under the reaction conditions from the Lewis acid and compound II.

10. The process according to claim 9, wherein compound III is selected from pyridine, alkylpyridines and nonpolymerizable, aprotic organosilicon compounds having at least one Si-O bond.

11. The process according to claim 8 or 9, wherein compound II and compound III are used in a III:II molar ratio in the range from 1:1 to 1:1000.

12. The process according to any of claims 5 to 11, wherein the solvent for the polymerization is selected from hydrocarbons having from 2 to 10 carbon atoms, inert halogenated hydrocarbons having from 1 to 3 carbon atoms and mixtures thereof.

13. The process according to any of claims 5 to 12, wherein the polyisobutenes are recovered by removing the solvent at temperatures of at least 150°C.

14. The use of a polyisobutene derivative according to claim 1 as an additive in lubricant compositions.

15. A lubricant composition comprising, in addition to customary additive components, at least one polyisobutene derivative according to claim 1 in quantities of from 0.5 to 25% by weight, based on the total weight of the composition.

16. The lubricant composition according to claim 15 in the form of a fuel economy engine oil.

17. The use of polyisobutenes having a maximum M_{P} in the molecular weight distribution in the range from > 20 000 to 120 000 and a polydispersity M_{W}/M_{N} of below 1.4 to improve the viscosity index of lubricant compositions.

18. A lubricant composition comprising at least one polyisobutene having a maximum Mp in the molecular weight distribution in the range from > 20 000 to 120 000 and a polydispersity M_{W}/M_{N} of below 1.4 in a quantity of from 0.5 to 5% by weight, based on the total weight of the composition.

19. The lubricant composition according to claim 18 additionally comprising at least one polyisobutene derivative of succinic acid according to claims 1 to 4 in a quantity of from 0.5 to 25% by weight.

## Revendications

1. Dérivés polyisobutényliques de l'acide succinique, que l'on peut obtenir par :
i) réaction d'un polyisobutène ayant une teneur en groupes terminaux réactifs d'au moins 80 %, dont la répartition du poids moléculaire est **caractérisée par** un maximum Mp de la courbe de répartition de l'ordre de 500 à 20 000 Daltons et par un rapport entre le poids moléculaire moyen pondéral et le poids moléculaire moyen numérique M_{w}/M_{N} en dessous de 1,4, avec de l'acide maléique ou de l'anhydride maléique,
ii) réaction du dérivé de polyisobutène d'acide succinique obtenu dans i) avec au moins un composé I qui présente au moins un groupe amino primaire ou secondaire et/ou un groupe OH, avec formation d'une liaison amide ou ester.

2. Dérivé polyisobuténylique suivant la revendication 1, dans lequel le polyisobutène présente une répartition de poids moléculaire ayant un maximum Mp de l'ordre de 1 500 à 15 000.

3. Dérivé polyisobuténylique suivant la revendication 1 ou 2, dans lequel le composé I présente au moins un groupe amino primaire.

4. Dérivé polyisobuténylique suivant la revendication 3, dans lequel le composé I est choisi parmi des diamines de la formule générale Ia :
H₂N-(R-NH)ₘ-A-(NH-R')ₙ-NH₂ (Ia)
dans laquelle
A représente un groupe alkylène en C₂-C₂₀, qui peut être interrompu par un ou plusieurs atomes d'oxygène non voisins, ou cycloalkylène en C₅-C₂₀,
R, R' représentent, indépendamment l'un de l'autre, un groupe alkylène en C₂-C₄, et
n, m valent, indépendamment l'un de l'autre, 0 à 5.

5. Procédé de préparation de dérivés polyisobutényliques suivant l'une des revendications précédentes, **caractérisé en ce**
- **qu'**on polymérise de l'isobutène en présence d'un système d'amorceur, comprenant
a) un acide de Lewis choisi parmi des chlorures de métal et des chlorures de métalloïde covalents,
b) et au moins un composé II comportant au moins un groupe fonctionnel FG, qui, dans des conditions de polymérisation, forme un carbocation ou un complexe cationogène, FG étant choisi parmi de l'halogène, un acyloxy et un alcoxy, qui sont fixés sur un atome de C aliphatique secondaire ou tertiaire, un atome de C allylique ou un atome de C benzylique,
dans un solvant inerte vis-à-vis de l'acide de Lewis avec un rapport molaire entre l'acide de Lewis et le composé II de l'ordre de 10/1 à 1/100, un polyisobutène ayant une teneur en groupes terminaux oléfiniques d'au moins 80 % molaires, dont la répartition de poids moléculaire présente un maximum Mp de l'ordre de 500 à 20 000 et une polydispersité M_{W}/M_{N} en dessous de 1,4, étant obtenu, et
- **qu'**on fait réagir le polyisobutène ainsi obtenu successivement avec de l'acide maléique ou de l'anhydride maléique et ensuite avec un composé I qui présente au moins un groupe amino primaire ou secondaire et/ou un groupe OH.

6. Procédé suivant la revendication 5, dans lequel le composé II est choisi parmi des composés de la formule générale :
CH₃-C(CH₃)₂-[CH₂-C (CH₃)₂]ₖ-X
dans laquelle k vaut 0, 1, 2, 3 ou 4 et X représente de l'halogène ou un groupe alkyloxy ou acyloxy.

7. Procédé suivant la revendication 5 ou 6, **caractérisé en ce qu'**on met en oeuvre le composé II en une quantité de 0,001 à 0,3 mole par mole d'isobutène.

8. Procédé suivant l'une des revendications 5 à 7, **caractérisé en ce que** l'acide de Lewis est choisi parmi du chlorure de titane (IV) et du trichlorure de bore.

9. Procédé suivant l'une des revendications 5 à 8, **caractérisé en ce que** le système d'amorceur présente en supplément au moins un composé polaire aprotique III qui est approprié pour la complexation avec l'acide de Lewis ou le carbocation ou complexe cationogène à base d'acide de Lewis et de composé II, formé dans des conditions réactionnelles.

10. Procédé suivant la revendication 9, **caractérisé en ce que** le composé III est choisi parmi de la pyridine, des alkylpyridines et des composés organosiliciques aprotiques, non polymérisables, comportant au moins une liaison Si-O.

11. Procédé suivant l'une des revendications 8 ou 9, **caractérisé en ce qu'**on met en oeuvre le composé II et le composé III dans un rapport molaire de III/II de l'ordre de 1/1 à 1/1 000.

12. Procédé suivant l'une des revendications 5 à 11, **caractérisé en ce que** le solvant pour la polymérisation est choisi parmi des hydrocarbures comportant 2 à 10 atomes de C, des hydrocarbures halogénés inertes comportant 1 à 3 atomes de C et leurs mélanges.

13. Procédé suivant l'une des revendications 5 à 12, **caractérisé en ce que**, pour l'obtention des polyisobutènes, on élimine le solvant à des températures d'au moins 150°C.

14. Utilisation d'un dérivé de polyisobutène suivant la revendication 1, comme additif dans des compositions de lubrifiant.

15. Composition de lubrifiant, contenant, à côté des composants additifs courants, au moins un dérivé de polyisobutène suivant la revendication 1, en des quantités de 0,5 à 25 % en poids par rapport au poids total de la composition.

16. Composition de lubrifiant suivant la revendication 15, sous la forme d'une huile légère pour moteur.

17. Utilisation de polyisobutènes présentant un maximum Mp de la répartition de poids moléculaire de l'ordre de > 20 000 jusqu'à 120 000 et une polydispersité M_{w}/M_{N} en dessous de 1,4, pour l'amélioration de l'indice de viscosité de compositions de lubrifiant.

18. Composition de lubrifiant contenant au moins un polyisobutène présentant un maximum Mp de la répartition de poids moléculaire de l'ordre de > 20 000 jusqu'à 120 000 et une polydispersité M_{w}/M_{N} en dessous de 1,4, en une quantité de 0,5 à 5 % en poids par rapport au poids total de la composition.

19. Composition de lubrifiant suivant la revendication 18, contenant en supplément au moins un dérivé de polyisobutène de l'acide succinique suivant les revendications 1 à 4, en une quantité de 0,5 à 25 % en poids.
